# EUROPÄISCHE PATENTSCHRIFT

(11) **EP 3 341 539 B1**
(45) Veröffentlichungstag und Bekanntmachung des Hinweises auf die Patenterteilung: **09.10.2019**
(21) Anmeldenummer: 16759707.9
(22) Anmeldetag: 22.08.2016
(51) Int. Cl.: E04F 10/06, B60P 3/32, E04H 15/08

(54) **FAHRZEUGMARKISE MIT UNTERSTÜTZUNGSROLLEN FÜR DIE WICKELWELLE**
VEHICLE AWNING WITH INTERMEDIATE SUPPORT ROLLERS FOR THE WINDING SHAFT
AUVENT DE VÉHICULE COMPRENANT DES ROULEAUX SUPPORTS INTERMÉDIAIRES POUR L'ARBRE D'ENROULEMENT

(30) Priorität: 26.08.2015 DE 202015104515 U
(43) Veröffentlichungstag der Anmeldung: 04.07.2018
(73) Patentinhaber: Fiamma S.p.A., 21010 Cardano al Campo (VA) (IT)
(72) Erfinder: POZZI, John-David, 8004 Zürich (CH); POZZI, Charles Philip, 20129 Mailand (IT)
(74) Vertreter: Kluin, Jörg-Eden
(86) Internationale Anmeldenummer: PCT/EP2016/069802
(87) Internationale Veröffentlichungsnummer: WO 2017/032743

(56) Entgegenhaltungen:
- DE-U1- 29 806 658
- DE-U1-202005 007 158

## Beschreibung

Die Erfindung betrifft eine Fahrzeugmarkise. Fahrzeugmarkisen sind bereits bekannt.

Eine einschlägige Fahrzeugmarkise ist beispielsweise aus DE 20 2005 007158 U1 bekannt. Eine Tuchwellenabstützung für eine Markise in allgemeiner Weise ist in DE 298 06 658 U1 angegeben.

Nachteilig bei bekannten Fahrzeugmarkisen ist, dass sie aufwendig zu fertigen sind und/oder keine wünschenswerte Belastbarkeit aufweisen und/oder kein wünschenswertes optisches Erscheinungsbild aufweisen.

Die Erfindung hat es sich zur Aufgabe gemacht, eine Fahrzeugmarkise zu schaffen, die zumindest hinsichtlich eines der genannten Nachteile verbessert ist.

Diese Aufgabe wird durch die in Anspruch 1 wiedergegebene Fahrzeugmarkise gelöst.

Die erfindungsgemäße Fahrzeugmarkise weist eine Wickeltrommel mit einem wahlweise auf die Wickeltrommel aufrollbaren und von der Wickeltrommel abrollbaren Fahrzeugmarkisentuch auf. Die Fahrzeugmarkise umfasst auch ein die Wickeltrommel aufnehmendes Gehäuse. Das Gehäuse umfasst eine Frontleiste.

Bei der Fahrzeugmarkise kann es sich insbesondere um eine Reisemobil- oder eine Wohnwagenmarkise handeln.

Die Wickeltrommel ist bevorzugt drehbar im Gehäuse gelagert.

Die Frontleiste ist bevorzugt an der vorderen Kante des Markisentuchs angeordnet.

Mit dem Begriff "vorne" ist im Rahmen dieser Druckschrift insbesondere die der Frontleiste zugewandte Seite der Markise bezeichnet, die bevorzugt zumindest in etwa in Ausrollrichtung des Markisentuchs liegt.

Die Frontleiste kann auch als Ausfallende oder Ausfallprofil oder Frontblende bezeichnet werden.

Erfindungsgemäß umfasst die Fahrzeugmarkise Fahrzeugmarkisenfüße, die an der Frontleiste befestigt sind und bei geschlossener Markise in dem Gehäuse angeordnet sind und teleskopisch ausgebildet sind.

Die Fahrzeugmarkise weist bevorzugt Gelenkarme auf, die bevorzugt zwischen Frontleiste und dem übrigen Gehäuse wirken und bei geschlossener Markise in dem Gehäuse angeordnet sein können.

Das Gehäuse kann auch als Kassette bezeichnet werden.

Erfindungsgemäß sind auf den Außenumfang der Wickeltrommel wirkende Unterstützungsmittel vorgesehen. Die Unterstützungsmittel umfassen bevorzugt Stützmittel. Die Stützmittel bewirken bevorzugt eine Kraft auf die Wickeltrommel zumindest auch nach oben. Die Stützmittel umfassen bevorzugt einen Zylinder, der zumindest auch unter der Wickeltrommel-Achse, bevorzugt genau unter der Wickeltrommel-Achse, angeordnet sein kann.

Die Unterstützungsmittel sichern mit Vorteil die Linearität der Wickeltrommel. Sie verhindern also vorzugsweise eine Durchbiegung der Wickeltrommel. Die Stützmittel verhindern mit Vorteil ein nach unten Durchbiegen der Wickeltrommel aufgrund der Gewichtskraft.

Erfindungsgemäß umfassen die Unterstützungsmittel Rückhaltemittel. Bevorzugt bewirken die Rückhaltemittel - mit Vorteil zusammen mit den Stützmitteln - eine Sicherheitsumschließung der Wickeltrommel. Die Rückhaltemittel tragen bevorzugt dazu bei, dass die Wickeltrommel stets im Inneren des Gehäuses gehalten ist. Die Rückhaltemittel können Schwingungen der Wickeltrommel während der Fahrt minimieren. Insbesondere während des Ausrollvorgangs und Einrollvorgangs vermeiden Sie bevorzugt eine Durchbiegung der Wickeltrommel in Markisentuchausrollrichtung. Dies verhindert bevorzugt eine Fehlpositionierung des Tuchs auf der Wickeltrommel und minimiert weiter bevorzugt die Faltenbildung.

Bevorzugt bewirken die Rückhaltemittel eine Kraft auf die Wickeltrommel zumindest auch entgegen der Markisentuchausrollrichtung. Bevorzugt bewirken die Rückhaltemittel eine Kraft auf die Wickeltrommel zumindest auch nach hinten. Mit dem Begriff "hinten" ist im Rahmen dieser Druckschrift insbesondere die die der Frontleiste gegenüberliegende Seite der Markise bezeichnet.

Die Rückhaltemittel sind bevorzugt zumindest auch vor der Wickeltrommel-Achse angeordnet.

Die Unterstützungsmittel umfassen erfindungsgemäß Zylinder, deren Mantelflächen bevorzugt in Kontakt mit der Wickeltrommel stehen. Die Zylinder können auch als Rollen oder Walzen bezeichnet werden. Die Zylinder-Achsen verlaufen bevorzugt parallel zur Achse der Wickeltrommel. Die Länge der Zylinder ist bevorzugt kleiner als 1/5 und besonders bevorzugt kleiner als 1/10 der Länge der Wickeltrommel. Die Länge der Zylinder ist bevorzugt größer als 1/50 und weiter bevorzugt größer als 1/30 der Länge der Wickeltrommel.

Erfindungsgemäß sind die Unterstützungsmittel zumindest in etwa auf halber Länge der Wickeltrommel angeordnet und umfassen zwei Zylinder, wobei ein Zylinder unter der Achse der Wickeltrommel und ein anderer Zylinder vor der Achse der Wickeltrommel angeordnet ist. Wenn die Unterstützungsmittel zumindest in etwa auf halber Länge der Wickeltrommel angeordnet sind, dann ist diese an dem Punkt unterstützt, an dem es am effektivsten ist.

Die Unterstützungsmittel unterstützen die Wickeltrommel also zumindest in etwa mittig.

Wenn die Unterstützungsmittel zwei Zylinder - mit Vorteil genau einen StützZylinder und genau einen Rückhalte-Zylinder - umfassen, die bevorzugt in einer gemeinsamen Lagereinrichtung drehbar gelagert sind, dann sind besonders einfach zu fertigende und dennoch belastbare Unterstützungsmittel geschaffen.

Die gemeinsame Lagereinrichtung umfasst mit Vorteil zwei Lagerarme, die vorzugsweise mittels eines Zwischenelements, vorzugsweise einstückig, zu einer gemeinsamen Lagereinheit verbunden sind. Die Zylinder sind mit Vorteil zwischen diesen Lagerarmen angeordnet. Die Lagereinrichtung ist mit Vorteil mithilfe von Halterungen mit dem Fahrzeugmarkisengehäuse, vorzugsweise dem hinteren Teil, verbunden. Die Halterungen sind vorzugsweise aus Metall gefertigt und weiter bevorzugt mit zugehörigen Verbindungsmitteln, etwa Schrauben, mit dem Gehäuse verbunden.

Wenn das Fahrzeugmarkisentuch von oben von der Wickeltrommel abrollt, werden funktionale Vorteile unter mechanischen Gesichtspunkten erreicht, insbesondere während des Öffnens und während des Schließens der Markise. Beispielsweise kann erreicht werden, dass Blätter, die sich auf dem ausgerollten Markisentuch befinden und vor dem Einrollvorgang versehentlich nicht entfernt wurden, nicht mit aufgerollt werden, sondern von der Wickeltrommel nach unten fallen können. Gleiches gilt für Staub, Sand oder dergleichen.

Das Fahrzeugmarkisentuch ist mit Vorteil so herum auf der Wickeltrommel aufgerollt, dass bei dem Ausrollen des Fahrzeugmarkisentuchs die Oberseite der Wickeltrommel nach vorne rotiert.

Mit Vorteil umfasst die Fahrzeugmarkise eine Fahrzeug-Wandmarkise oder ist durch eine Fahrzeug-Wandmarkise gebildet. Fahrzeug-Wandmarkisen zeichnen sich durch ihre Montage an der Wand eines Fahrzeugs und nicht etwa auf dem Dach eines Fahrzeugs aus und weisen ein schlankes Gehäuse auf, welches nur zu einer geringfügigen Verbreiterung des Fahrzeugs führt.

Bevorzugt ist die Gehäuseerstreckung von vorne nach hinten, die im Rahmen dieser Druckschrift auch als Gehäusetiefe bezeichnet wird, kleiner, als die Gehäusehöhe. Mit dem Begriff "Gehäusehöhe" wird im Rahmen dieser Druckschrift die senkrecht zur Gehäusetiefe und senkrecht zur Achse der Wickeltrommel verlaufende Gehäuseerstreckung bezeichnet.

Mit Vorteil ist die Gehäusetiefe kleiner als ¾ der Gehäusehöhe.

Wenn das Gehäuse zumindest nahezu über seine gesamte Höhe öffnet, können mehrere Vorteile erzielt werden. Mit Vorteil erstreckt sich die Frontleiste - bevorzugt zumindest nahezu - über die gesamte Höhe des Gehäuses.

Hierdurch ist eine Voraussetzung dafür geschaffen, dass, wie bevorzugt, sich das Gehäuse aus lediglich zwei Hälften und bevorzugt zwei Endkappen zusammensetzt. Die Endkappen verschließen das Gehäuse bevorzugt. Anstelle von im Stand der Technik bekannten Gehäusen, die zusätzlich zu den zwei Endkappen drei weitere Teile aufweisen, kann hierdurch eine Vereinfachung der Fertigung bei Erhöhung der Belastbarkeit erzielt werden.

Bei den beiden Hälften handelt es sich bevorzugt um einen hinteren Gehäuseteil und die Frontleiste. Die beiden Hälften umfassen mit Vorteil jeweils genau ein Profil, welches bevorzugt Stranggepresst ist und vorzugsweise Aluminium umfasst. Vorzugsweise sind die beiden Hälften jeweils durch genau ein derartiges Profil gebildet.

Das Gehäuse kann also genau zwei stranggepresste Profile aufweisen.

Wenn die Frontleiste vier Aufnahmeschlitze aufweist, von denen einer, mehrere oder alle als Kederschienen ausgestaltet sein können und einer dieser Aufnahmeschlitze auf der inneren Seite der Fronleiste angeordnet ist und die drei übrigen Aufnahmeschlitze auf der äußeren Seite der Frontleiste angeordnet sind, dann können mehrere Vorteile erreicht werden: Durch den inneren Aufnahmeschlitz ist eine bewährte Befestigung der vorderen Kante des Markisentuchs an der Frontleiste geschaffen. Die vordere Kante des Fahrzeugmarkisentuchs ist bevorzugt in eine innere Kederschiene der Frontleiste eingezogen.

Durch die drei äußeren Aufnahmeschlitze ist etwa eine Voraussetzung für die Eignung der Markise zur Anbringung von Zeltwänden geschaffen, die aus der Markise eine Art Vorzelt bilden und es stehen zwei weitere Kederschienen zur Verfügung, etwa um Abspannleinen anzubringen oder Zubehör, wie Wäscheaufhängvorrichtungen.

Die außen an der Frontleiste angeordneten Aufnahmeschlitze können bevorzugt auch als Zubehörschienen bezeichnet werden.

Die Erfindung soll nun anhand eines in den Zeichnungen gezeigten Ausführungsbeispiels näher erläutert werden. Es zeigen:
- Fig. 1: eine perspektivische Darstellung eines Ausführungsbeispiels einer erfindungsgemäßen Markise im geschlossenen Zustand;
- Fig. 2: eine Explosionsdarstellung von Fig. 1;
- Fig. 3: das Detail III aus Fig. 1;
- Fig. 4: eine Seitenansicht der in Fig. 1 gezeigten Markise;
- Fig. 5: eine Darstellung wie in Fig. 1, jedoch aus einem anderen Blickwinkel und mit geöffneter Frontleiste;
- Fig. 6: eine perspektivische Darstellung der Unterstützungsmittel;
- Fig. 7: eine Ansicht wie in Fig. 6, jedoch aus einem anderen Blickwinkel;
- Fig. 8: eine Darstellung wie in Fig. 6, jedoch als Explosionsdarstellung;
- Fig. 9: eine Querschnittsdarstellung der Markise aus Fig. 1 entlang der Linien IX- IX.

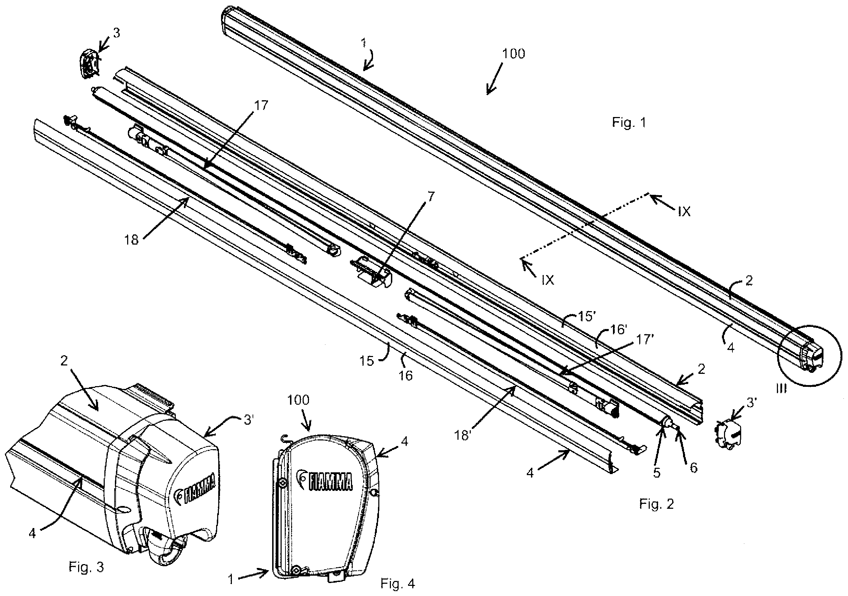

Figuren 1 und 2 zeigen, dass das gezeigte Ausführungsbeispiel der erfindungsgemäßen Fahrzeugmarkise 100 ein Gehäuse 1 aufweist, das einen hinteren Teil 2 umfasst, der als Profil und zwar als Aluminium-Strangpressprofil ausgeführt ist sowie eine Frontleiste 4, die ebenfalls als Aluminium-Strangpressprofil ausgeführt ist. Zudem sind zwei Endkappen 3, 3' erkennbar. Diese können aus Kunststoff gefertigt sein.

An dem hinteren Teil 2 des Gehäuses ist mittels der Endkappen 3, 3' eine Wickeltrommel 6 drehbar gelagert. Die Wickeltrommel 6 verbleibt während des Ein- und Ausrollvorgangs stets an dem hinteren Teil 2 des Gehäuses.

Fig. 2 zeigt zudem das wahlweise auf die Wickeltrommel 6 aufrollbare und von der Wickeltrommel 6 abrollbare Fahrzeugmarkisentuch 5, in aufgerolltem Zustand.

Die Markise umfasst zudem für sich genommen aus dem Stand der Technik bekannte Gelenkarme 17, 17' sowie teleskopische Stützfüße 18, 18'.

Die Figuren 3 und 4 zeigen Ausschnitte des Gehäuses in größerem Maßstab.

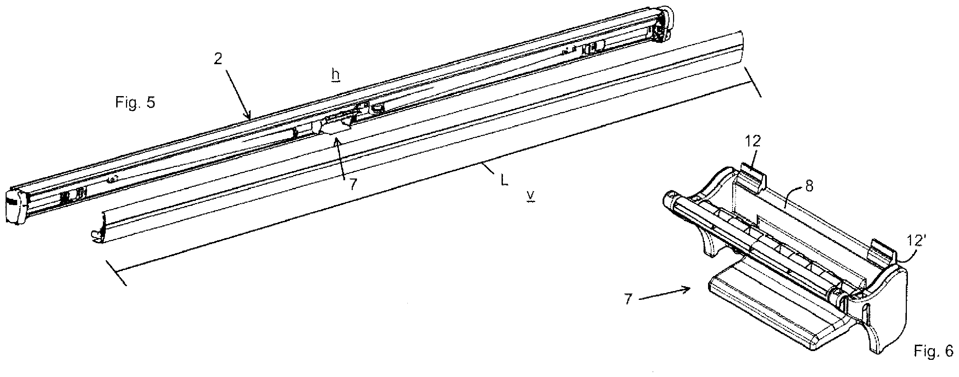

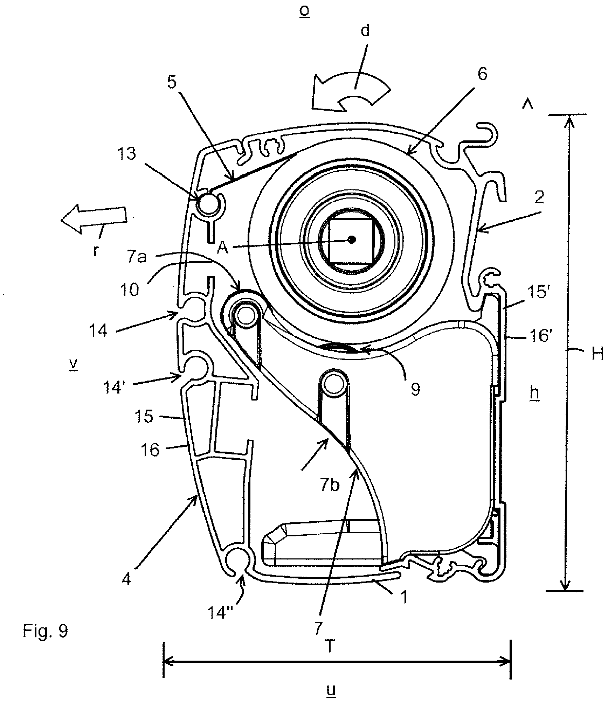

Wie die Figuren 2 und 5 zeigen sind etwa auf halber Länge L der Wickeltrommel 6 Unterstützungsmittel 7 vorgesehen. (Das Markisentuch 5 ist in Figur 5 zur besseren Darstellung weggelassen). Die Unterstützungsmittel 7 umfassen Stützmittel 7b, die einen Zylinder umfassen, der unter der Achse A der Wickeltrommel 6 angeordnet ist (siehe Fig. 9). Die Stützmittel 7b bewirken eine Kraft auf die Wickeltrommel 6, die zumindest im Wesentlichen nach oben gerichtet ist und ein gewichtskraftbedingtes Durchhängen der Wickeltrommel 6 verhindern.

Die Unterstützungsmittel 7 umfassen zudem Rückhaltemittel 7a, die einen Zylinder 10 umfassen, der vor der Achse A der Wickeltrommel 6 angeordnet ist. Wie Fig. 9 zeigt, ist dieser Zylinder nicht genau vor der Achse angeordnet, sondern schräg unterhalb vor dieser Achse. Die von dem Rückhaltemittel 7a auf die Wickeltrommel 6 ausgeübte Kraft enthält eine Kraftkomponente nach hinten h. Sie verhindert daher eine Durchbiegung der Wickeltrommel 6 nach vorne v, und daher auch in der durch einen Pfeil r in Fig. 9 symbolisierten Ausrollrichtung des Markisentuchs 5.

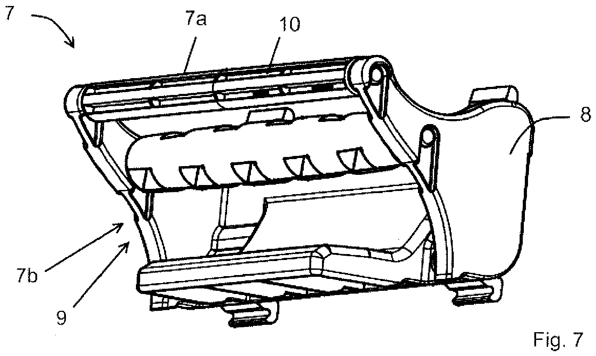

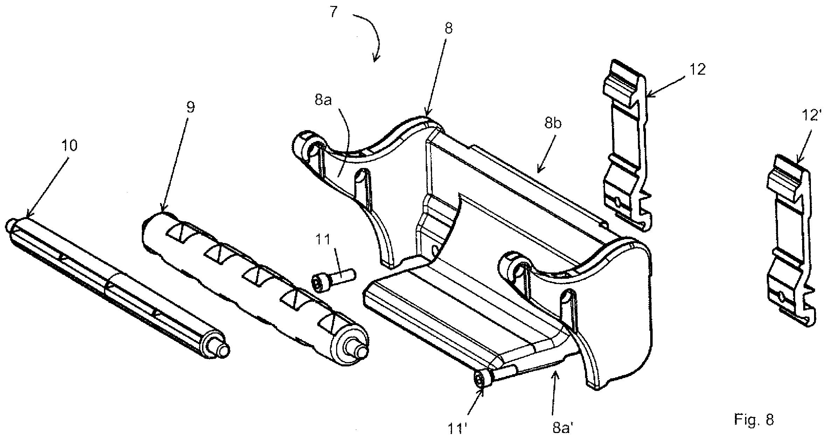

Wie die Figuren 6 bis 8 zeigen, sind die beiden Zylinder 9, 10 der Unterstützungsmittel 7 in einer gemeinsamen Lagereinrichtung 8 drehbar gelagert, die eine Lagereinheit umfasst, die durch zwei seitliche Lagerarme 8a, 8a' und ein diese einstückig verbindendes Zwischenelement 8b gebildet ist. Die Lagereinheit ist mithilfe von Metallhaltern 12, 12' und zugehörigen Schrauben 11, 11' an dem hinteren Teil 2 des Gehäuses befestigt.

Fig. 9 zeigt auch, dass das Fahrzeugmarkisentuch 5 von oben von der Wickeltrommel 6 abrollt. Bei einem Ausrollen des Fahrzeugmarkisentuchs 5 rotiert die Oberseite der Wickeltrommel nach vorne (durch den Pfeil d symbolisiert).

Die Figur zeigt auch, dass das Gehäuse 1 über seine gesamte Höhe H öffnet. Denn die Frontleiste 4 erstreckt sich zumindest nahezu über die gesamte Höhe H des Gehäuses 1.

Zudem ist erkennbar, dass es sich um eine Fahrzeug-Wandmarkise handelt. Die Tiefe T des Gehäuses 1 entspricht höchstens 3/4 der Höhe H des Gehäuses 1. Mit "Tiefe T" wird im Rahmen dieser Druckschrift die Gehäuseerstreckung bezeichnet, die von vorne v nach hinten h verläuft. Mit dem Begriff "Tiefe T" wird im Rahmen dieser Druckschrift die Gehäuseerstreckung bezeichnet, die zumindest in etwa in Richtung der Ausrollrichtung des Markisentuchs 5 verläuft. Die Höhe H des Gehäuses verläuft von oben o nach unten u und steht senkrecht auf der Tiefe T und der Achse A der Wickeltrommel.

Aus Fig. 9 ist auch erkennbar, dass die Frontleiste 4 genau eine innere Kederschiene 13 aufweist, mittels der das Fahrzeugmarkisentuch 5 an der Frontleiste 4 befestigt ist und genau drei äußere Kederschienen 14, 14', 14", die für Zubehör zur Verfügung stehen.

### Bezugszeichenliste:

- 100: Fahrzeugmarkise
- 1: Gehäuse
- 2: hinterer Teil des Gehäuses
- 3,3': Endkappen
- 4: Frontleiste
- 5: Markisentuch
- 6: Wickeltrommel
- 7: Unterstützungsmittel
- 7a: Rückhaltemittel
- 7b: Stützmittel
- 8: gemeinsame Lagereinrichtung der Unterstützungsmittel
- 8a, 8a': Lagerarme
- 8b: Zwischenelement
- 9: unterer Zylinder
- 10: oberer Zylinder
- 11, 11': Verbindungsmittel, Schrauben
- 12, 12': Halterungen
- 13: innerer Schlitz, Kederschiene
- 14, 14', 14": äußere Schlitze, äußere Kederschienen
- 15, 15': Gehäusehälften
- 16, 16': Profile
- 17, 17': Gelenkarme
- 18, 18': Teleskopstützfüße

- A: Wickeltrommel-Achse
- H: Gehäusehöhe
- T: Tiefe des Gehäuses
- L: Länge der Wickeltrommel
- d: Drehrichtung
- h: hinten
- v: vorne
- o: oben
- u: unten
- r: Ausrollrichtung

## Patentansprüche

1. Fahrzeugmarkise (100), mit einer Wickeltrommel (6), mit einem wahlweise auf die Wickeltrommel (6) aufrollbaren und von der Wickeltrommel (6) abrollbaren Fahrzeugmarkisentuch (5), mit einem die Wickeltrommel (6) aufnehmenden Gehäuse (1), das eine Frontleiste (4) aufweist, wobei auf den Außenumfang der Wickeltrommel (6) wirkende Unterstützungsmittel (7) vorgesehen sind,
***dadurch gekennzeichnet, dass***
die Unterstützungsmittel (7) Rückhaltemittel (7a) umfassen, und die Unterstützungsmittel (7) zumindest in etwa auf halber Länge (L) der Wickeltrommel (6) angeordnet sind und zwei Zylinder (9, 10) umfassen, wobei ein Zylinder (9) unter der Achse (A) der Wickeltrommel (6) angeordnet ist und ein anderer Zylinder (10) vor der Achse (A) der Wickeltrommel (6) angeordnet ist, und wobei an der Frontleiste (4) Fahrzeugmarkisenfüße (18, 18') befestigt sind, die teleskopisch ausgebildet sind und bei geschlossener Markise (100) in dem Gehäuse (1) angeordnet sind.

2. Fahrzeugmarkise nach Anspruch 1, **dadurch gekennzeichnet, dass** das Fahrzeugmarkisentuch (5) von oben von der Wickeltrommel (6) abrollt.

3. Fahrzeugmarkise nach einem der Ansprüche 1 bis 2, **dadurch gekennzeichnet, dass** die Fahrzeugmarkise (100) eine Fahrzeug-Wandmarkise ist.

4. Fahrzeugmarkise nach einem der Ansprüche 1 bis 3, **dadurch gekennzeichnet, dass** das Gehäuse (1) über seine gesamte Höhe (H) öffnet.

5. Fahrzeugmarkise nach einem der Ansprüche 1 bis 4, **dadurch gekennzeichnet, dass** sich das Gehäuse (1) aus zwei Gehäusehälften (15, 15') und zwei Endkappen (3, 3') zusammensetzt.

6. Fahrzeugmarkise nach einem der Ansprüche 1 bis 5, **dadurch gekennzeichnet, dass** das Gehäuse (1) genau zwei stranggepresste Profile (16, 16') aufweist.

7. Fahrzeugmarkise nach einem der Ansprüche 1 bis 6, **dadurch gekennzeichnet, dass** die Frontleiste (4) vier Kederschienen (13, 14, 14', 14") aufweist.

## Claims

1. Vehicle awning (100) comprising a winding drum (6), comprising a vehicle awning cloth (5) which can be selectively rolled onto the winding drum (6) and unrolled from the winding drum (6), comprising a housing (1) which receives the winding drum (6) and has a front strip (4), support means (7) being provided which act on the outer circumference of the winding drum (6), **characterized in that** the support means (7) comprise retaining means (7a), and the support means (7) are arranged at least approximately halfway along the length (L) of the winding drum (6) and comprise two cylinders (9, 10), one cylinder (9) being arranged under the shaft (A) of the winding drum (6), and another cylinder (10) being arranged in front of the shaft (A) of the winding drum (6), and vehicle awning feet (18, 18') being attached to the front strip (4), which feet are telescopic and are arranged in the housing (1) when the awning (100) is closed.

2. Vehicle awning according to claim 1, **characterized in that** the vehicle awning cloth (5) unrolls off the winding drum (6) from above.

3. Vehicle awning according to either claim 1 or claim 2, **characterized in that** the vehicle awning (100) is a vehicle-wall awning.

4. Vehicle awning according to any of claims 1 to 3, **characterized in that** the housing (1) opens over the entire height (H) thereof.

5. Vehicle awning according to any of claims 1 to 4, **characterized in that** the housing (1) is composed of two housing halves (15, 15') and two end caps (3, 3').

6. Vehicle awning according to any of claims 1 to 5, **characterized in that** the housing (1) has exactly two extruded profiles (16, 16').

7. Vehicle awning according to any of claims 1 to 6, **characterized in that** the front strip (4) has four piping rails (13, 14, 14', 14").

## Revendications

1. Store de véhicule (100) pourvu d'un tambour d'enroulement (6), d'une toile de store de véhicule (5) qui peut sélectivement être enroulée sur le tambour d'enroulement (6) et déroulée du tambour d'enroulement (6), d'un boîtier (1) qui reçoit le tambour d'enroulement (6) et présente une barre frontale (4), des moyens de support (7) qui agissent sur la périphérie extérieure du tambour d'enroulement (6) étant prévus, **caractérisé en ce que** les moyens de support (7) comprennent des moyens de retenue (7a), et les moyens de support (7) sont disposés au moins approximativement sur la moitié de la longueur (L) du tambour d'enroulement (6) et comprennent deux cylindres (9, 10), un cylindre (9) étant disposé sous l'axe (A) du tambour d'enroulement (6) et un autre cylindre (10) étant disposé devant l'axe (A) du tambour d'enroulement (6), et des pieds de store de véhicule (18, 18') étant fixés sur la barre frontale (4), lesquels pieds de store de véhicule sont conçus en forme téléscopique et sont disposés dans le boîtier (1) lorsque le store (100) est à l'état fermé.

2. Store de véhicule selon la revendication 1, **caractérisé en ce que** la toile de store de véhicule (5) roule à partir du haut du tambour d'enroulement (6).

3. Store de véhicule selon l'une des revendications 1 à 2, **caractérisé en ce que** le store de véhicule (100) est un store de paroi de véhicule.

4. Store de véhicule selon l'une des revendications 1 à 3, **caractérisé en ce que** le boîtier (1) s'ouvre sur toute sa hauteur (H).

5. Store de véhicule selon l'une des revendications 1 à 4, **caractérisé en ce que** le boîtier (1) est constitué de deux moitiés de boîtier (15, 15') et de deux embouts (3, 3').

6. Store de véhicule selon l'une des revendications 1 à 5, **caractérisé en ce que** le boîtier (1) présente exactement deux profilés extrudés (16, 16').

7. Store de véhicule selon l'une des revendications 1 à 6, **caractérisé en ce que** la barre frontale (4) présente quatre rails à bourrelet (13, 14, 14', 14").
